# EUROPEAN PATENT APPLICATION

(11) **EP 2 448 264 A1**
(43) Date of publication of application: **02.05.2012**
(21) Application number: 10811176.6
(22) Date of filing: 08.06.2010
(51) Int. Cl.: H04N 7/173

(54) **METHOD AND DEVICE FOR HIERARCHICALLY CONTROLLING ACCESSED MULTICAST GROUP**

(30) Priority: 24.08.2009 CN 200910091702
(71) Applicant: ZTE Corporation, Shenzhen, Guangdong 518057 (CN)
(72) Inventor: LIU, Shuang, Shenzhen Guangdong 518057 (CN); YU, Cong, Shenzhen Guangdong 518057 (CN)
(74) Representative: Manitz, Gerhart
(86) International application number: PCT/CN2010/073662
(87) International publication number: WO 2011/023016

(57) **Abstract**

A method for hierarchically controlling an access multicast group is disclosed, which divides the access authority control hierarchies of the multicast group and configures control rules for each authority control hierarchy. The method includes: performing authority control on an accessing user in a present authority control hierarchy according to the configured control rules, and if the user does not pass the authority control, then rejecting the user accessing the multicast group requested by the user; if the user passes the authority control, then going into the next authority control hierarchy to perform the authority control on the accessing user until accessing all the configured authority control hierarchies. Accordingly, a device for hierarchically controlling an access multicast group is provided, which includes: a division module, a control module, and a triggering module. Thus, the method and the device can hierarchically and flexibly control the on-demand multicast group of a user so as to improve the quality of the multicast group.

## Description

### Technical Field

The present invention relates to the data communication technique, and specifically, to a method and a device for hierarchically controlling an access multicast group.

### Background of the Related Art

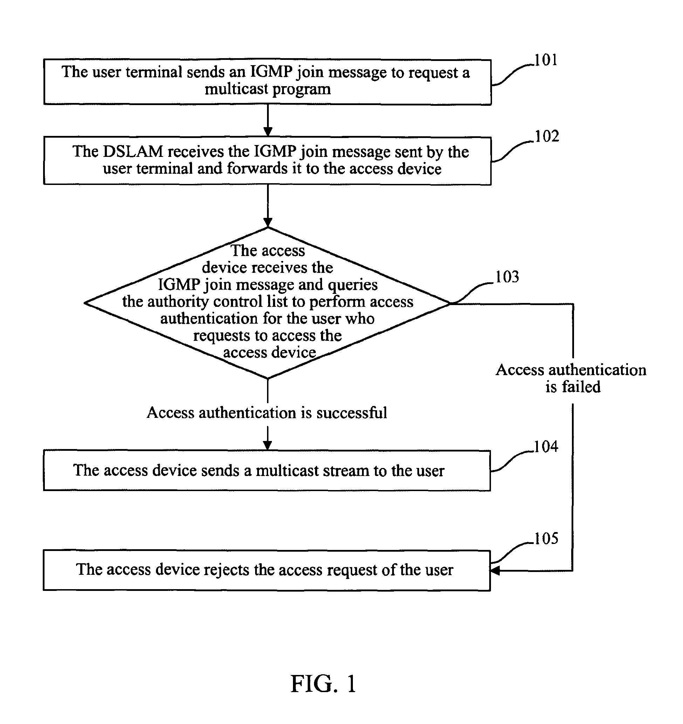

Internet protocol television (IPTV), launched by operators on the basis of broadband, uses the internet protocol (IP) broadband network, and integrates multiple techniques such as internet, multimedia, and communication and so on. IPTV provides a plurality of interactive services, such as live television, video on demand, and surfing on Internet, and the like, wherein the implementation procedure of IPTV can see FIG. 1 as follows.

Step 101, a user terminal sends an Internet group management protocol (IGMP) Join message to request a multicasting program.

The user terminal, when requesting a multicasting programs, sends an IGMP Join message to a digital subscriber line access multiplexer (DSLAM). The DSLAM is a central office end device of various digital subscriber lines (DSL), and belongs to the last mile access device. The function of the DSLAM is to accept all of the DSL lines and integrate traffics, which is equivalent to a layer 2 switch, wherein the user terminal may be forms such as a personal computer (PC) or a "television equipped with an IP set top box", and the like.

Step 102, the DSLAM receives the IGMP Join message sent by the user terminal and forwards the IGMP Join message to an access device.

Step 103, the access device receives the IGMP Join message and queries an authority control table to perform the access authentication for the user who requests to access the access device, and if the user who requests to access the access device passes the access authentication, step 104 is performed; if the user who requests to access the access device does not pass the access authentication, step 105 is performed;
wherein the authority control table is generated by the IPTV system of the access device and mainly includes: a port number of the switch, an access authority of the channel, the number of channels that have been on demand at present, and information of online users at present, and so on. In this step, the authority control for the user includes:
1) the authority control, including authorities of preview, view, query and reject, for the multicast group in which the user joins;
2) restrictions on the number of multicast groups in which the user is able to join at present;
3) restrictions on the bandwidth that the user is able to occupy at present.
4) As for the preview user, the authority control further includes a restriction on the preview interval and the number of the previews.

Step 104, the access device sends a multicast stream to the user.

Step 105, the access device rejects the access request from the user.

It can be seen from what is described above that the authority control for the user is only for once in the related art and the authority control is limited in an interface or a virtual local area network (VLAN), for the IP network that develops fast now however, since operators should provide higher quality services, the authority control for the user only in one hierarchy is unable to improve the service quality at present, and therefore it is needed to hierarchically control the authority of the user in multiple hierarchies.

At present, the access control for the user in IPTV all uses a single authority control hierarchy rather than a hierarchically access control for the user.

### Summary of the Invention

In view of this, the main object of the present invention is to provide a method and a device for hierarchically controlling an access multicast group, which are able to hierarchically and flexibly control the on-demand multicast group of a user so as to improve the quality of the multicast group.

In order to achieve the above object, the present invention discloses a method for hierarchically controlling an access multicast group, in which an authority control hierarchy of the access multicast group is divided, and a control rule for each authority control hierarchy is configured; and this method comprises: performing authority control on an accessing user in a present authority control hierarchy according to the configured control rule, and if the user does not pass the authority control, rejecting the user accessing the multicast group that is requested by the user; if the user passes the authority control, going to a next authority control hierarchy to perform the authority control on the accessing user, until determining whether the user has an access authority according to the configured authority control hierarchy.

The step of dividing the authority control hierarchy of the access multicast group comprises: dividing the authority control hierarchy of the access multicast group from a whole to a part based on a logical relation of interfaces; and/or, dividing the authority control hierarchy of the access multicast group from a hierarchy with a high level to a hierarchy with a low level based on different user authority levels.

In the above method, the authority control hierarchy of the access multicast group is: the authority control hierarchy of the access multicast group divided from the whole to the part based on the logical relation of interfaces, including: a first authority control hierarchy, a second authority control hierarchy, a third authority control hierarchy and a fourth authority control hierarchy; wherein the first authority control hierarchy is a whole access device; the second authority control hierarchy is an interface of the access device; the third authority control hierarchy is the interface and a virtual local area network (VLAN) of the access device; the fourth authority control hierarchy is the interface, VLAN and a Internet protocol (IP) address of the access device; and/or, the authority control hierarchy of the access multicast group divided from the hierarchy with the high level to the hierarchy with the low level based on different user authority levels, including: a first authority control hierarchy, which is used for limiting a bandwidth that a present user is able to occupy; a second authority control hierarchy, which is used for performing the authority control on an on-demand multicast group of the user; and a third control hierarchy, which is used for limiting a number of multicast streams accessed by the user.

The step of configuring the control rule for each authority control hierarchy comprises: configuring an allowable bandwidth of the authority control hierarchy as the control rule of the authority control hierarchy; and/or, limiting a number of multicast groups in which the user is able to join to control an access authority of the user for accessing the multicast group.

In the above method, the step of performing authority control on an accessing user in the present authority control hierarchy according to the configured control rule comprises: controlling a user authority of the present authority control hierarchy according to the allowable bandwidth of each authority control hierarchy, and when a sum of a bandwidth occupied by the user on-demand multicast group received by the present authority control hierarchy and a bandwidth that has been occupied in the present authority control hierarchy is not greater than a limitation value of the allowable bandwidth of the present authority control hierarchy, going into the next authority control hierarchy to perform the authority control; and/or, controlling an authority of the access multicast group according to the number of the multicast streams in which the user is able to join allowed by each authority control hierarchy, and when a sum of the number of on-demand multicast streams of the user received by the present authority control hierarchy and the number of multicast streams that have been on-demanded in the present authority control hierarchy is greater than a limitation value of the number of the multicast streams of the present authority control hierarchy, going into the next authority control hierarchy to perform the authority control.

Before the step of going into the next authority control hierarchy to perform the authority control of the accessing user, the method also comprises: configuring a control strategy, and judging whether to go into the next authority control hierarchy to perform the authority control according to the configured control strategy, and if going into the next authority control hierarchy, performing the authority control on the accessing user in the next authority control hierarchy; if further authority control on the user is not required, permitting access of the user.

In the above method, the step of judging whether to go into the next authority control hierarchy to perform the authority control according to the configured control strategy comprises: traversing all of authority control hierarchies until reaching a top hierarchy of the authority controlling hierarchy; or, configuring a value representing a high priority or a low priority for the control rule of each authority control hierarchy, in which a greater value indicating a higher priority; and beginning hierarchical control from the control rule with a lowest priority, and not stopping the authority control of the next authority control hierarchy until the priority of the present authority control hierarchy reaches the value representing to stop accessing the next authority control hierarchy.

In order to achieve the above method, the present invention provides a device for hierarchically controlling an access multicast group, and the device comprises: a division module, a control module, and a triggering module; wherein the division module is configured to: divide an authority controlling hierarchy of the access multicast group, and configure a control rule of each authority control hierarchy; the control module is configured to: perform authority control on the multicast group that the user requests to access according to the control rule configured by the division module; the triggering module is configured to: trigger the authority control of a next authority control hierarchy according to a result of the authority control on the multicast group by the control module.

The device further comprises: a decision module, which is configured to: configure a control strategy, and judge whether to perform the authority control of the next authority control hierarchy on the multicast group accessed by the user according to the control strategy, and is configured to notify the triggering module when going into the next authority controlling hierarchy to perform the authority control.

The division module is specifically configured to: divide the authority control hierarchy of the access multicast group from a whole to a part based on a logical relation of interfaces; or, divide the authority control hierarchy of the access multicast group from a hierarchy with a high level to a hierarchy with a low level based on different user authority levels; and/or, the division module is specifically configured to: configure an allowable bandwidth of the authority control hierarchy as the control rule of the authority control hierarchy; and/or, limit a number of multicast groups in which the user is able to join to control an access authority of the user for accessing the multicast group.

In the above device, the decision module is specifically configured to: traverse all of the authority control hierarchies until to a top hierarchy of the authority controlling hierarchies; or, configure a value representing a high priority or a low priority for the control rule of each authority control hierarchy, in which a greater value indicating a higher priority; and begin hierarchical control from the control rule with a lowest priority, and not stop the authority control of the next authority control hierarchy until the priority of the present authority control hierarchy reaches the value representing to stop accessing the next authority control hierarchy.

It can be seen from the above technical scheme that the access device of the present invention hierarchically divides the multicast group, and controls the multicast group according to the present authority control hierarchy and the configured control rule, if the multicast group is approved by the authority control of the present authority control hierarchy, the multicast group should go into the next authority control hierarchy of the present authority control hierarchy until all of the configured authority control hierarchies are completed, so as to implement to hierarchically control the multicast group. It is thus evident that the authority control for the on-demand multicast group of the user in the present invention is more refined, and therefore, operators may control the multicast group accessed by the user by multiple authority control hierarchies and consider the restriction conditions of various aspects from the whole to the part to provide services with higher qualities, thereby enhancing competitiveness.

Additionally, the device adopted by the present invention is relatively simple and facilitates implementation. Meanwhile, the technical scheme according to the embodiment of the present invention adopts the standard from the whole to the part to divide the authority control hierarchy of the access multicast groups, and the control rule of each authority control hierarchy may adopt the same strategy or different control strategies to achieve flexible control, which breaks the limitation of the prior conventional single control method and satisfies the requirements for hierarchical control on the on-demand multicast groups of the user, thereby being able to provide a clearer video program with higher qualities. The present invention has stronger advantages for the presently developed IPTV services, such as the internet live video, remote video on demand, program source producing, and relaying or live high definition digital program and so on.

### Brief Description of Drawings

FIG.1 is a flowchart for implementing the IPTV service;
FIG. 2 is a flowchart of the method for hierarchically controlling an access multicast group according to the present invention;
FIG. 3 is a schematic diagram of the control authority hierarchy according to the present invention;
FIG. 4 is a schematic diagram of the structure of the device for hierarchically controlling an access multicast group according to the present invention.

### Preferred Embodiments of the Present Invention

The basic concept of the present invention is: configuring the control rule for each authority control hierarchy by dividing the authority control hierarchy of the access multicast group of the user to perform the authority control on the user of the access multicast group, thereby implementing to hierarchically control the access multicast group.

In order to make the above object, features and advantages of the present invention to be more readily understood, the present invention will be further described in detail in combination with the drawings and specific embodiments.

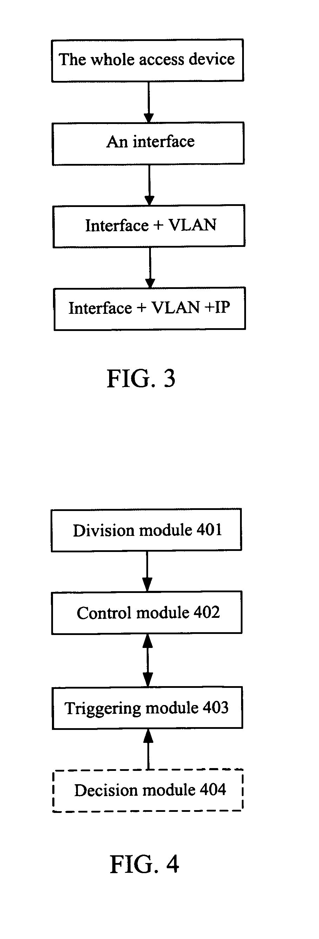

Before describing the method for hierarchically controlling the multicast group according to the present invention, it is needed to describe the method for dividing the authority control hierarchy on the multicast group, wherein the methods for dividing the access authority control hierarchy of the multicast group are different based on the different IPTV service requirements. The hierarchies of the authority control of the multicast group may generally be divided in deep and detail step by step based on the standard from the whole to the part according to the logical relation of the interfaces or may be divided from the high hierarchy to the low hierarchy according to different user authorities, the ways of which may mainly include, but not limited to, the following two:
I. The authority control hierarchies of the access multicast group are divided from the whole to the part according to the logical relation of the interfaces, and the configuration of the control rule for each authority control hierarchy and the control for the message will be described as follows, as shown in FIG. 3.

The first authority control hierarchy: controlling the access authority for the multicast group requested by the user based on the whole access device;
for example: when the access device is a switch, and if the interfaces of the switch are all occupied or reach to the maximum load, the access device rejects the multicast group requested by the user.

The second authority control hierarchy: controlling the authority for the multicast group based on an interface of the access device;
wherein the interface may be a 100M Ethernet interface, a gigabyte Ethernet interface or an asynchronous transfer mode (ATM) interface, and the like. Obviously, the interface may be a link aggregation control protocol (LACP) interface integrated by these practical physical interfaces.

The third authority control hierarchy: configuring the VLAN Trunk control on the basis of the second authority control hierarchy interface of the access device;
wherein the VLAN Trunk is a type of interfaces and enables the interconnection of the hosts in the same VLAN connected to different switches. It is thus obvious that both a real physical interface and a virtual interface may belong to multiple VLANs, and the VLAN to which a message belongs may be determined based on the VLAN TAG included in the message received by the interface.

The forth authority controlling hierarchy: adding a limitation of the IP address on the basis of configuring the VLAN Trunk control for the interface of the access device.

Because each interface may receive messages from different IP address, adding the limitation of the IP address thus refines the hierarchy of the authority control of the multicast group in a greater degree.

For example: the available bandwidth of the whole access device is 240M, so the bandwidth limitation of the first hierarchy is 240M; when the sum of the bandwidth occupied by the multicast group received by the access device and the occupied bandwidth is not greater than the tolerant bandwidth threshold 240M, the control of the next hierarchy is performed; while the threshold of the bandwidth at the interface is unnecessarily equal to the bandwidth threshold of the whole access device divided by the number of the interfaces of the access device, but may be configured according to the practical operation conditions of each interface of the access device; it is assumed that the allowable bandwidth of the interface is 50M, and then, when the sum of the bandwidth of this multicast group and the bandwidth occupied the present interface is not greater than 50M, the control of the next hierarchy is performed; the control rule of all of the following hierarchies are searched according to this method, which will not be repeated herein.

It should be pointed out that when the authority control hierarchy of the multicast group is divided according to the logical relation of the interface, it is not limited to the above four hierarchies, but the authority control hierarchies may be increased or decreased according to the specific practical conditions.
II. The authority control hierarchy of the multicast group is divided according to the levels of the authority control from the high level to the low level. In fact, the level of the control authority mentioned herein is not a qualitative level, but is assigned based on the content with which the operators are concerned according to the specific requirement in practice; for example: some of the programs provided by the operators are high quality programs, e.g., high definition digital television (HDTV) classified programs, and the bandwidth of these programs are generally broader, so the priority of the bandwidth is higher, and accordingly, the authority control hierarchy may be divided into:
   the first authority control hierarchy: used for limiting the bandwidth that the present user can occupy;
   the second authority control hierarchy: used for limiting the authority of the on-demand multicast group of the user; and
   the third authority controlling hierarchy: used for limiting the number of the multicast streams accessed by the user.

What needs clarification is that the above limitations to the user bandwidth and the authority of the on-demand multicast group and the number of the accessed multicast streams may be configured to different authority control hierarchies or to the same authority control hierarchy.

Two ways of dividing the authority control hierarchy of the multicast group are described briefly above, in fact, the practical application is not limited to the above two ways, and the number of hierarchies of each dividing way is also not limited to four or three, and a plurality of hierarchies may be decreased or increased according to specific requirements. Additionally, it should be explained that the above limitation rules are only the major rules, and a plurality of basic limitation rules in each hierarchy is also necessary, for example assigning the access authority of a channel or binding a certain suite.

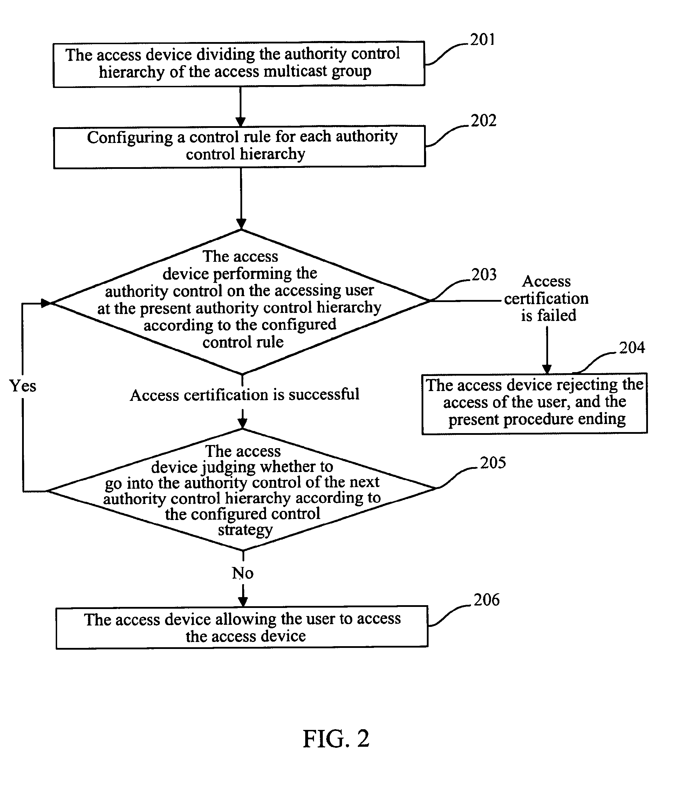

FIG. 2 shows a flowchart of the method for hierarchically controlling an access multicast group according to the present invention, which mainly comprises the following steps.

Step 201, the access device divides the authority control hierarchy for an access multicast group.

For example: based on the hierarchically dividing method from the whole to the part according to the logical relation of the interface, the whole of the access device acts as the first authority control hierarchy, the interface acts as the second authority control hierarchy, the interface + VLAN act as the third authority control hierarchy, and the interface + VLAN +IP act as the forth authority control hierarchy.

Step 202, a control rule is configured for each authority control hierarchy.

The user authority of the present hierarchy is controlled based on the tolerant bandwidth of each authority control hierarchy; and/or, the user authority is controlled by limiting the number of the multicast groups in which the user could join; the control rules of each hierarchy may be different or same, for example, the authority of the access multicast group is controlled based on the number of the multicast streams in which the user is permitted to join by each hierarchy; the configuration command for the specific control rule is as follows.

For the first authority control hierarchy for controlling the authority of the whole access device, the authority control rule is configured under the global mode, e.g., the command: iptv service start for representing that the first authority cont; the control rule of the first authority control hierarchy may be set as the channel mode, e.g., iptv control channel and iptv channel id-list 0-5 permit, which is the most basic authority control rule, or additionally set as other modes such as the suite mode; the first authority control hierarchy may also limit the number of the multicast streams accessed by the user, e.g., the command: iptv max-stream 2400 for representing that the number of the multicast streams of the first authority control hierarchy is limited to 2400; the first authority control hierarchy may also limit the bandwidth occupied by the user, e.g., the command: iptv max-bandwidth 240 for representing that the bandwidth of the first authority control hierarchy is limited to 240M. The commands may be configured according to the authority control rule or may be configured in parallel with the authority control rule.

For the second authority control hierarchy, i.e., the interface authority control hierarchy, the command format for configuring the authority control rule of the second authority controlling layer is basically consistent with that of the first authority control hierarchy with the exception that the configuration command should change the maximum number of the multicast streams that could be accessed and the occupied bandwidth, which are configured as needed in practice and configured with references to the above illustrated examples of the control rules, at this point under the interface mode.

For the third authority control hierarchy, i.e., the interface + VLAN authority control hierarchy, the command format for configuring the authority control rule of the third authority control hierarchy increases the limitation to the VLAN under the interface mode, for example: iptv VLAN 10 service start; iptv VLAN 10 control channel; iptv VLAN 10 channel id-list 0-5 permit; iptv VLAN 10 max-stream 10.

For the fourth authority control hierarchy, i.e., the interface + VLAN + IP authority control hierarchy is still under the interface mode, and the command format should increase the VLAN and IP, for example: iptv VLAN 10 ip 10.1.1.1 service start; iptv VLAN 10 control channel; iptv VLAN 10 channel id-list 0 deney. The fourth authority controlling hierarchy can also configure a channel rejection authority for the specific user for the purpose of rejecting a certain user accessing a certain channel by the operator in the practical application. Therefore, the specific limitations to the bandwidth and the number of the multicast streams may be configured for the specified users.

Step 203, the access device performs the authority control to the accessing user in the present authority control hierarchy according to the configured control rule, and if the user does not pass the authority control, step 204 is executed; if the user passes the authority control, step 205 is executed;
wherein the user sends an IGMP Join message of the multicast group to the access device, the access device receives the IGMP Join message from the user, and then extracts the user authority control parameters, such as, an on-demand channel by the user who requests access, an access authority, an occupied bandwidth, the number of accessed multicast streams, and a port number of the switch, an access authority of the channel, the number of the channels that has been on-demand at present, and information of online users at present and so on, according to the authority control list generated by the IPTV system based on the divided authority control hierarchy of the access multicast group, and then starts the authority control to the user in the present authority control hierarchy. If the user is approved by the present authority control hierarchy, then there is need to go to the next authority control hierarchy of the present authority control hierarchy, until all of the configured authority control hierarchies are completed.

For example: it is assumed that there are 24 interfaces on the access device in all, and the number of the multicast streams that could be accessed of the whole access device is 2400. Then in the first authority controlling hierarchy, when the sum of the number of the multicast streams received by the access device and the number of present access multicast streams that has accessed at present of the whole access device is smaller than 2400, the control of the second authority control hierarchy is performed; the access device configures the number of the multicast streams accessed by each interface as 100, and when the sum of the number of the multicast streams received by the interface and the number of the multicast streams that has accessed at present by the interface is smaller than 100, the control of the third authority control hierarchy is performed; when assuming the interface belongs to 2 Trunk VLAN, then the number of the multicast streams in the hierarchy of the third authority control hierarchy, i.e., the interface + VLAN, is limited to 50, and when the sum of the number of the multicast streams in this VLAN received by the interface and the number of the access multicast streams that has accessed at present in the VLAN to which the interface belongs is smaller than 50, the control of the fourth authority control hierarchy is performed; when assuming that the number of accessible IP address in a VLAN to which the interface belongs is 5, then the number of the multicast streams of the hierarchy of the fourth authority control hierarchy, i.e., the interface + VLAN + IP, is limited to 10, and when the number of the multicast groups accessed in this hierarchy is not greater than the limitation value 10, it is denoted that the authentication on this user succeeds, and the user is allowed to access the requested on-demand multicast group.

Step 204, the access device rejects the access of user, and the present procedure ends.

Step 205, the access device judges whether to perform the authority control of the next authority control hierarchy according to the configured control strategy, and if the authority control of the next authority control hierarchy is performed, returns to step 203; or else, if the further authority control for the user is unnecessary, executes step 206;
wherein the control strategy is configured according to the established authority control hierarchy such as different dividing ways. For example: the authority control is performed on the accessing user by different divided authority control hierarchies; besides, each authority control hierarchy needs to be executed in order to further refine the authority control, and then, the judgment condition of whether to perform the authority control of the next authority control hierarchy is changed into: whether all of the authority control hierarchies have been traversed, until the authority control hierarchy reaches the top hierarchy.

For another example: the control strategy is configured according to the configured priority of the control rule of each authority control hierarchy. The authority control hierarchy is divided according to different control rules and priorities, each authority control hierarchy can use different control rules, and then a value representing a high priority or a low priority is configured for the control rule of each authority control hierarchy, such as the greater the value is, the higher the priority is. Thus, the hierarchical control is started from the bottom hierarchy, that is the authority control hierarchy with the lowest priority, and the authority control of the next authority control hierarchy is performed until the priority of the present authority control hierarchy reaches the value representing to stop accessing the next authority control hierarchy, and then it is decided directly whether to reject the user's request or to accept the user's request according to the control rule of the present authority control hierarchy. It should be pointed out that the judgment conditions in the practical application are not limited to the above two.

It should be pointed out that the access device performs the authority control judgment according to the configured control strategy until determines whether the user has an access authority according to the configured authority control hierarchy, control rule and control strategy, and so on with steps 203 and 205.

Step 206, the access device allows the user to access the access device.

Up to now, with the technical scheme according to the embodiment of the present invention, the authority control hierarchy is divided from the whole to the part to control the authority of the access multicast group of the user, and different control rules and hierarchy divisions are used according to different requirements, which enables operators to provide a clearer video program with higher qualities. The present invention has stronger advantages for the presently developed IPTV services.

For facilitating description, each of the above embodiments is described as a series of action combinations, those skilled in the art, however, should understand that the present invention is not limited to any order of the actions described above because a plurality of steps may be executed in a different order or be executed at the same time according to the present invention.

In order to implement the above method, the present invention also provides a device for hierarchically controlling an access multicast group and the structure of the device is as shown in FIG. 4, which mainly comprises the following modules:
a division module 401, which is configured to: divide the authority control hierarchy of the access multicast group, and configure a control rule for each authority control hierarchy;
a control module 402, which is configured to: perform authority control for the multicast group that the user request to access according to the control rule configured by the division module 401; and
a triggering module 403, which is configured to: trigger the authority control of the next authority control hierarchy according to the result of the authority control for the multicast group by the control module 402.

The above-mentioned device further includes:
a decision module 404, which is configured to configure a control strategy, and judge whether to perform the authority control of the next authority control hierarchy for the multicast group accessed by the user according to the control strategy, and is configured to: notify the triggering module 403 when performing the authority control of the next authority control hierarchy.

The division module 401 is specifically configured to: divide the authority control hierarchy of the access multicast group from the whole to the part based on the logical relation of the interface; or, divide the authority control hierarchy of the access multicast group from the hierarchy with a high level to a the hierarchy with a low level according to different user authority levels.

The division module 401 is specifically configured to: configure the tolerant bandwidth in the authority control hierarchy as the control rule of the authority control hierarchy; and/or, limit the number of multicast groups in which the user could joins to control the authority of the user for accessing the multicast group.

The decision module 404 is specifically configured to: traverse all of the authority control hierarchies until reaching the top hierarchy of the authority control hierarchy; or, configure a value representing a high priority or a low priority for the control rule of each authority control hierarchy, in which the greater the value is, the higher the priority is; and start the hierarchical control from the control rule with the lowest priority, and do not stop the authority control of the next authority controlling hierarchy until the priority of the present authority control hierarchy reaches the value representing to stop accessing the next authority control hierarchy.

To sum up, the device adopted by the present invention is relatively simple and facilitates implementation. Meanwhile, the technical scheme according to the embodiment of the present invention adopts the standard from the whole to the part to divide the authority control hierarchy of the multicast groups accessed by the user, and the authority control rule of each authority control hierarchy may adopt the same strategy or different control strategies to achieve flexible control, which breaks the limitation of the prior conventional single control method and can satisfy the requirements for multiple hierarchies control, thereby providing a clearer video program with higher qualities. The present invention has stronger advantages for the presently developed IPTV services, such as the internet live video, remote video on demand, program source producing, and relaying or live high definition digital program and so on.

In the above-mentioned embodiments, the description of various embodiments have their own particular emphases, the part which is not described in detail in an embodiment may refer to the relative description of other embodiments. The above description is only preferred embodiments of the present invention, and is only used to describe and explain the present invention rather than limiting the protection scope of the present invention. Any modifications and equivalent substitutes made to the present invention in the spirit of the present invention and the protection scope of the accompanied claims should all fall into the protection scope of the present invention.

## Claims

1. A method for hierarchically controlling an access multicast group, **characterized by** dividing an authority control hierarchy of the access multicast group, and configuring a control rule for each authority control hierarchy; and this method comprising:
performing authority control on an accessing user in a present authority control hierarchy according to the configured control rule, and if the user does not pass the authority control, rejecting the user accessing the multicast group that is requested by the user;
if the user passes the authority control, going to a next authority control hierarchy to perform the authority control on the accessing user, until determining whether the user has an access authority according to the configured authority control hierarchy.

2. The method according to claim 1, wherein the step of dividing the authority control hierarchy of the access multicast group comprises:
dividing the authority control hierarchy of the access multicast group from a whole to a part based on a logical relation of interfaces;
and/or, dividing the authority control hierarchy of the access multicast group from a hierarchy with a high level to a hierarchy with a low level based on different user authority levels.

3. The method according to claim 2, wherein the step of dividing the authority control hierarchy of the access multicast group further comprises:
dividing the authority control hierarchy of the access multicast group from the whole to the part based on the logical relation of interfaces, including: a first authority control hierarchy, a second authority control hierarchy, a third authority control hierarchy and a fourth authority control hierarchy; wherein,
the first authority control hierarchy is a whole access device; the second authority control hierarchy is an interface of the access device; the third authority control hierarchy is the interface and a virtual local area network (VLAN) of the access device; the fourth authority control hierarchy is the interface, VLAN and a Internet protocol (IP) address of the access device; and/or,
dividing the authority control hierarchy of the access multicast group from the hierarchy with the high level to the hierarchy with the low level based on different user authority levels, including:
a first authority control hierarchy, which is used for limiting a bandwidth that a present user is able to occupy;
a second authority control hierarchy, which is used for performing the authority control on an on-demand multicast group of the user; and
a third control hierarchy, which is used for limiting a number of multicast streams accessed by the user.

4. The method according to claim 1, 2 or 3, wherein the step of configuring the control rule for each authority control hierarchy comprises:
configuring an allowable bandwidth of the authority control hierarchy as the control rule of the authority control hierarchy; and/or,
limiting a number of multicast groups in which the user is able to join to control an access authority of the user for accessing the multicast group.

5. The method according to claim 4, wherein the step of performing authority control on an accessing user in the present authority control hierarchy according to the configured control rule comprises:
controlling a user authority of the present authority control hierarchy according to the allowable bandwidth of each authority control hierarchy, and when a sum of a bandwidth occupied by the user on-demand multicast group received by the present authority control hierarchy and a bandwidth that has been occupied in the present authority control hierarchy is not greater than a limitation value of the allowable bandwidth of the present authority control hierarchy, going into the next authority control hierarchy to perform the authority control; and/or,
controlling an authority of the access multicast group according to the number of the multicast streams in which the user is able to join allowed by each authority control hierarchy, and when a sum of the number of on-demand multicast streams of the user received by the present authority control hierarchy and the number of multicast streams that have been on-demanded in the present authority control hierarchy is greater than a limitation value of the number of the multicast streams of the present authority control hierarchy, going into the next authority control hierarchy to perform the authority control.

6. The method according to claim 1, 2 or 3, before the step of going into the next authority control hierarchy to control the authority of the accessing user, also comprising:
configuring a control strategy, and judging whether to go into the next authority control hierarchy to perform the authority control according to the configured control strategy, and if going into the next authority control hierarchy, performing the authority control on the accessing user in the next authority control hierarchy; if further authority control on the user is not required, permitting access of the user.

7. The method according to claim 6, wherein the step of judging whether to go into the next authority control hierarchy to perform the authority control according to the configured control strategy comprises:
traversing all of authority control hierarchies until reaching a top hierarchy of the authority controlling hierarchy; or,
configuring a value representing a high priority or a low priority for the control rule of each authority control hierarchy, in which a greater value indicating a higher priority; and beginning hierarchical control from the control rule with a lowest priority, and not stopping the authority control of the next authority control hierarchy until the priority of the present authority control hierarchy reaches the value representing to stop accessing the next authority control hierarchy.

8. A device for hierarchically controlling an access multicast group, and the device comprising: a division module, a control module, and a triggering module; wherein,
the division module is configured to: divide an authority controlling hierarchy of the access multicast group, and configure a control rule of each authority control hierarchy;
the control module is configured to: perform authority control on the multicast group that the user requests to access according to the control rule configured by the division module;
the triggering module is configured to: trigger the authority control of a next authority control hierarchy according to a result of the authority control on the multicast group by the control module.

9. The device according to claim 8, further comprising:
a decision module, which is configured to: configure a control strategy, and judge whether to perform the authority control of the next authority control hierarchy on the multicast group accessed by the user according to the control strategy, and is configured to notify the triggering module when going into the next authority controlling hierarchy to perform the authority control.

10. The device according to claim 8 or 9, wherein the division module is specifically configured to: divide the authority control hierarchy of the access multicast group from a whole to a part based on a logical relation of interfaces; or, divide the authority control hierarchy of the access multicast group from a hierarchy with a high level to a hierarchy with a low level based on different user authority levels; and/or,
the division module is specifically configured to: configure an allowable bandwidth of the authority control hierarchy as the control rule of the authority control hierarchy; and/or, limit a number of multicast groups in which the user is able to join to control an access authority of the user for accessing the multicast group.

11. The device according to claim 9, wherein the decision module is specifically configured to:
traverse all of the authority control hierarchies until to a top hierarchy of the authority controlling hierarchies; or,
configure a value representing a high priority or a low priority for the control rule of each authority control hierarchy, in which a greater value indicating a higher priority; and begin hierarchical control from the control rule with a lowest priority, and not stop the authority control of the next authority control hierarchy until the priority of the present authority control hierarchy reaches the value representing to stop accessing the next authority control hierarchy.
